(19) Europäisches Patentamt
European Patent Office
Office européen des brevets

(11) Numéro de publication: **0 004 225**
**B1**

# (12) FASCICULE DE BREVET EUROPEEN

(45) Date de publication du fascicule du brevet: **14.07.82**

(51) Int. Cl.$^3$: **C 01 B 33/28** //C11D3/12

(21) Numéro de dépôt: **79400119.8**

(22) Date de dépôt: **27.02.79**

## (54) Procédé de fabrication d'un silico-aluminate synthétique et produits obtenus.

(30) Priorité: **02.03.78 FR 7805939**

(43) Date de publication de la demande:
**19.09.79 Bulletin 79/19**

(45) Mention de la délivrance du brevet:
**14.07.82 Bulletin 82/28**

(84) Etats contractants désignés:
**BE DE GB IT LU NL**

(56) Documents cités:
**DE - A - 2 722 535**
**DE - A - 2 722 564**
**FR - A - 2 347 322**
**FR - A - 2 386 484**
**FR - E - 83 942**
**US - A - 4 075 280**

(73) Titulaire: **RHONE-POULENC INDUSTRIES**
**22 Avenue Montaigne**
**F-75008 Paris (FR)**

(72) Inventeur: **Latourrette, Bertrand**
**4, Square Xavier Monteny**
**F-93220 Gagny (FR)**
Inventeur: **Michel, Max**
**54, Cours Franklin Roosevelt**
**F-69006 Lyon (FR)**
Inventeur: **Poisson, Régis**
**Résidence des Hauts de Sèvres 3, allée des Acacias**
**F-92310 Sevres (FR)**
Inventeur: **Aubry, Alain**
**40, rue de Toul**
**F-75012 Paris (FR)**

(74) Mandataire: **Martin, Henri et al,**
**RHONE-POULENC RECHERCHES Service Brevets Chimie et Polymères 25, quai Paul Doumer**
**F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 004 225 B1

Courier Press, Leamington Spa, England.

# Procédé de fabrication d'un silico-aluminate synthétique et produits obtenus

La présente invention a trait à un nouveau procédé de fabrication de silico-aluminates synthétiques présentant des caractéristiques améliorées, ainsi qu'aux produits obtenus.

La présente invention concerne l'obtention de silico-aluminates cristallins de type A cristallisant dans le système cubique, et de type Na-*P*. Elle se rapporte aussi bien à des silico-aluminates sensiblement entièrement cristallisés, qu'à des produits renfermant une quantité importante de phase amorphe, laquelle peut être requise en raison des propriétés qu'elle apporte dans l'application par exemple d'échange de certains cations comme le magnésium, ou lors de la transformation par exemple dans une opération d'extrusion.

On a décrit depuis longtemps la fabrication de silico-aluminates cristallins à partir de solutions aqueuses de silicates et d'aluminates et cristallisation à une température comprise entre 0 et 100°C.

On fabrique aussi des silico-aluminates amorphes depuis longtemps tels que décrits dans US 2 739 073.

On sait que ces silico-aluminates cristallins ou amorphes trouvent de nombreuses applications dans des domaines aussi divers que les tamis moléculaires et la détergence.

On a même proposé de les utiliser en mélange, comme dans le cas de la détergence où l'on s'est aperçu que les silico-aluminates amorphes sont plus actifs pour l'échange des ions Mg que les silico-aluminates cristallins qui eux sont plus actifs vis à vis des ions Ca.

De plus, selon les applications l'on doit faire appel à des granulométries moyennes plus ou moins élevées, et à des distributions granulométriques plus ou moins serrées.

Ainsi, on pense actuellement que dans le cas de la détergence, il faut utiliser des silico-aluminates cristallins de granulométrie moyenne relativement faible, mais de répartition (ou distribution) étroite.

Enfin, une autre difficulté a surgi, d'ordre économique. En effet, pour rendre les silico-aluminates attrayants dans des applications telles que la détergence, il faut que le prix de revient des produits obtenus soit suffisamment bas, donc que le procédé mis en oeuvre soit simple, et ne nécessite pas des investissements prohibitifs.

De plus, d'un point de vue économique, il est intéressant de faire appel à des sources de réactifs les moins chères possibles, comme une liqueur de circuit Bayer, une telle liqueur renfermant du carbonate neutre de sodium. On sait en effet que dans un circuit Bayer de fabrication de l'alumine, la liqueur, à la sortie des filtres passe dans un décomposeur et que la liqueur dite décomposée renferme encore de l'alumine sous forme d'aluminate qui est irrécupérable, ce qui, bien évidemment, affecte la rentabilité du procédé.

On a déjà proposé un procédé qui permet de faire appel, comme source d'aluminate, à une liqueur décomposée de circuit Bayer, en introduisant la solution d'au moins un réactif, au moins en partie, en ligne dans un flux de liqueur recyclée provenant de la zone de formation du gel.

Mais bien que selon ce procédé on puisse évoluer en milieu relativement concentré en silico-aluminate, on reste encore limité.

On a aussi proposé un procédé qui permet de travailler en milieu plus concentré que dans les procédés industriellement utilisés actuellement. De plus, un tel procédé permet de contrôler à la fois la valeur moyenne de la taille des particules et leur distribution granulométrique.

Dans la demande française 2 347 322 il a aussi été proposé un procédé de fabrication de zéolite de type A en partant de milieux concentrés. Mais le procédé revendiqué fait appel à une source unique en silice et alumine, très spécifique, puisque limitée au métakaolin qui nécessite pour être obtenu, une étape de transformation à partir du kaolin. De plus, ce procédé est long puisqu'il consiste à réaliser tout d'abord un mélange comprenant, outre le métakaolin, de l'hydroxyde de sodium et éventuellement des centres de nucléation, puis après un mélangeage de ces produits, à extruder le mélange et à le faire cristalliser pendant un temps assez long et enfin à le laver et à le calciner.

Dans la demande française 2 381 716 on revendique un procédé selon lequel on prépare un mélange réactionnel comprenant du sodium, de la silice, de l'alumine et de l'eau, puis on soumet le mélange réactionnel à des conditions de malaxage par cisaillement haute intensité, on maintient le mélange réactionnel résultant à une température comprise entre 25 et 125°C jusqu'à formation des cristaux.

On remarque toutefois qu'il y a encore lieu de travailler en milieu dilué et que les opérations classiques de mélange et de formation du milieu de cristallisation sont nettement distinctes de l'opération de cristallisation elle-même. Ce procédé oblige malheureusement à des temps de mûrissement longs.

On a aussi décrit dans le FR—E 83 942 un procédé selon lequel on ajoute, en trente minutes et sous agitation, du métakaolin à une solution d'hydroxyde de sodium portée à 80°C, puis on maintient le mélange obtenu à une température d'environ 100°C pendant 2 à 4 heures jusqu'à cristallisation complète (exemple 4). Comme précédemment, dans ce cas les opérations de préparation du milieu et de cristallisation sont distinctes.

D'une manière générale, la synthèse des zéolites à partir de différentes sources de réactifs est décrite dans l'ouvrage "Zeolite Molecular Sieves" de D. W. BRECK. En partant de l'étude d'un certain

nombre de compositions de gel de silico-aluminate l'auteur a établi des relations entre la zéolite obtenue et le milieu de départ. (pages 270 et 271 et figures 4.5 et 4.6) Mais ces gels typiques sont préparés à partir de solutions aqueuses de $NaAlO_2$, $Na_2O.SiO_2$ et NaOH, et les réactifs apportés le sont sous forme de solutions ou suspensions aqueuses (p. 250 et 267), même dans le cas de sources constituées par des argiles, lesquelles sont d'abord activées à haute température puis traitées par des solutions aqueuses d'hydroxydes de métaux alcalins. (p. 313).

La demande de brevet FR—A—2 386 484 publiée le 3 novembre 1978 decrit un procédé pour la préparation de zéolite à partir de kaolin, en milieu relativement concentré, selon lequel le kaolin calciné est mis en suspension à chaud dans une solution d'hydroxyde de sodium, puis le milieu réactionnel est maintenu, sous agitation, à une température de 90—100°C pendant 2 heures, et la zéolite est séparée à la fin de la cristallisation. Mais ce procédé s'applique à la préparation d'une zéolite A et non pas Na—P dont le rapport molaire $SiO_2/Al_2O_3$ est plus élevé que pour une zéolite A.

L'objet de la présente invention est un procédé de fabrication de silico-aluminate 4A et Na—P qui permette de travailler en milieu très concentré en zeolite avec un minimum d'opérations unitaires.

Le procédé de fabrication de silico-aluminate alcalin de type 4A est réalisé par mélange, à chaud, d'au moins une source renfermant de la silice et de l'alumine avec un hydroxyde alcalin et de l'eau, l'un au moins des réactifs étant alimenté sous forme solide et la cristallisation au moins partielle se produisant simultanément au mélange, et se caractérise en ce qu'on mélange les réactifs en proportions telles que le milieu initial a la composition suivante exprimée en rapports molaires:

$SiO_2/Al_2O_3$ compris entre 1,5 et 2,5

$Na_2O/SiO_2$ compris entre 0,8 et 1,20

$H_2O/Na_2O$ compris entre 7 et 15

et prend l'aspect d'un mélange solide, puis on laisse évoluer ce mélange solide jusqu'à sa redispersion sous forme d'une suspension de silico-aluminate que l'on filtre, lave et sèche.

Avantageusement, on règle les conditions opératoires, de sorte à atteindre l'état solide rapidement, à partir du moment où l'aluminate est formé, de préférence entre 1 mn et 30 mn.

On observe également que selon le procédé de l'invention on passe par une phase de gel amorphe.

De manière préférentielle, la température de cristallisation est comprise entre 60 et 95°C et l'opération de cristallisation est effectuée pendant une période de 30 mn à 5 h.

Pour une température donnée et pour un temps donné, la quantité de phase cristalline augmente avec le rapport $H_2O/Na_2O$ et également dans une moindre mesure avec le rapport $SiO_2/Al_2O_3$ pour un rapport $Na_2O/SiO_2$ minimal.

Dans les phases cristallines, pour une composition donnée et pour une température donnée, le pourcentage d'hydroxysodalite correspond à la phase thermodynamiquement stable.

Ce pourcentage d'hydroxysodalite augmente également avec le rapport $Na_2O/SiO_2$, une augmentation de la température et une diminution des rapports $H_2O/Na_2O$ et/ou $SiO_2/Al_2O_3$.

De la même manière, on peut fabriquer un silico-aluminate alcalin de type Na—P par mélange, à chaud, d'au moins une source renfermant de la silice et de l'alumine avec un hydroxyde alcalin et de l'eau, l'un au moins des réactifs étant alimenté sous forme solide, caractérisé en ce qu'on mélange les réactifs en proportions telles que le milieu initial a la composition suivante exprimée en rapports molaires:

$SiO_2/Al_2O_3$ compris entre 2,5 et 5

$Na_2O/SiO_2$ compris entre 0,6 et 1

$H_2O/Na_2O$ compris entre 12 et 30

et prend l'aspect d'un mélange solide, une cristallisation au moins partielle se produisant simultanément au mélange, puis on laisse évoluer ce mélange solide à chaud jusqu'à redispersion sous forme d'une suspension de silico-aluminate que l'on filtre, lave et sèche.

Dans le cas où l'on part d'alumine hydratée, on est obligé d'ajouter de l'oxyde de sodium $Na_2O$ et de prévoir un chauffage supplémentaire pour former l'aluminate, avantageusement in situ. De manière pratique, on élève la température au moins au début de l'opération dans un intervalle compris entre 120 et 160°C.

Cette source d'alumine est particulièrement intéressante dans le cas de la production de composés de la famille de la cancrinite puisque l'on doit avoir dans le milieu un rapport molaire $Na_2O/SiO_2$ faible. Dans ces conditions de température pour un rapport molaire $Na_2O/SiO_2$ compris entre 0,5 et 0,6 on remarque la présence d'alumine hydratée à côté de la zéolite Na—P et pour un rapport de l'ordre de 0,6 à 1 on observe la présence de composés de la famille de la cancrinite.

Généralement, la source de silice est avantageusement constituée par solution aqueuse de silicate de sodium de rapport molaire $SiO_2/Na_2O$ compris entre 1 et 4.

La source d'alumine peut être constituée par un aluminate de sodium en poudre de rapport molaire

$$\frac{Na_2O}{Al_2O_3}$$

compris entre 1 et 1,5.

Elle peut aussi être constituée par un hydrate d'alumine de type hydragillite $Al(OH)_3$. On ne sortirait pas du cadre de la présente invention en utilisant un hydrate Bayer qui est sous forme pulvérulente, de perte au feu de l'ordre de 35% et qui provient du circuit Bayer, ce qui permet de récupérer de l'alumine des circuits Bayer. Elle peut aussi être constituée par un sel d'aluminium tel que sulfate, nitrate etc., ou un mélange de ces diverses sources. On peut également utiliser une source commune de silice et d'alumine, tel que du métakaolin.

Dans le cas où l'on prend comme source d'alumine une argile calcinée telle que métakaolin, les conditions opératoires doivent être considérées comme semblables.

La source d'hydroxyde alcalin peut être apportée séparément ou avec au moins l'une quelconque des sources de silice et d'alumine par exemple sous forme de silicate et/ou d'aluminate. Pour une température donnée et pour une composition donnée, la quantité de phase cristallisée augmente avec le temps.

Comme déjà dit précédemment un avantage important de la présente invention est de pouvoir produire des produits différents, à partir de sources variées, tout en permettant d'obtenir des spectres granulométriques serrés, et en permettant de contrôler le produit obtenu.

Les paramètres variables sur lesquels on peut jouer sont essentiellement la composition du milieu, les produits de départ, la température, et le temps de mélange et de cristallisation.

On peut selon l'invention faire des arrêts d'agitation lors du mélange.

On peut également apporter des réactifs en cours de mélange. Le mélange est notamment effectué par malaxage, extrusion, l'énergie mécanique dissipée lors du mélange peut servir à apporter in situ une partie de l'énergie thermique nécessaire mais on a mis en évidence qu'elle étrait incapable de modifier la cristallisation, ce qui permet de contrôler celleci par l'agitation lors de l'opération de mélange.

La présente invention concerne également les produits obtenus par le procédé selon l'invention.

En particulier, il est possible d'obtenir des produits avec des cristallites de petites dimensions agglomérées.

Dans le cas de produits comportant un mélange de phase amorphe et de phase cristalline on peut obtenir des formes agglomérées présentant des cristallites de petites dimensions notamment de taille sub-micronique.

Le procédé selon l'invention peut être mis en oeuvre au moyen d'un dispositif tel que décrit dans Chemical Engineer's Handbook — Fifth Edition de Perry et Chilton aux pages 19—14 à 19—25, et notamment on peut utiliser un malaxeur de type Sigma, ou à pales ou une extrudeuse.

Ce dispositif peut être thermostaté et de type réacteur homogène, agité ou non, ou réacteur piston. On peut notamment prévoir des gradients de température sur le dispositif. Comme déjà dit précédemment, les produits selon l'invention peuvent être utilisés dans de nombreuses applications, comme par exemple tamis moléculaire ou détergence.

On peut aussi mettre en oeuvre le produit obtenu en l'extrudant. Dans ce cas on peut augmenter sa plasticité en laissant subsister une quantité plus importante de phase amorphe.

Mais la présente invention sera plus aisément comprise à l'aide des exemples suivants donnés à titre illustratif mais nullement limitatif.

Dans une première série d'exemples on met en évidence les conditions d'obtention d'une zéolite de type 4A.

Dans ces exemples, on utilise comme réacteur un mélangeur de type Sigma tel que décrit dans l'ouvrage de Perry et Chilton précédemment cité (19—16), les réactifs sont constitués par du silicate de sodium de rapport molaire égal à 3,4 et l'aluminate de sodium en poudre.

Exemple 1

On porte le mélangeur à une température de 80°C et on introduit un mélange constitué de 717 g de silicate de sodium et 350 g d'aluminate de sodium de manière à avoir la composition suivante:

— $SiO_2/Al_2O_3$ = 1,85

— $Na_2O/SiO_2$ = 0,95

— $H_2O/Na_2O$ = 8,58

On observe:

— Au bout de 1 h 30 la formation d'un silico-aluminate de sodium amorphe,

— Au bout de 2 h la formation d'environ 60% de silico-aluminate de type 4A et 40% d'hydroxy-sodalite.

Exemple 2

Cet exemple est identique au précédent sauf que l'on augmente le rapport $H_2O/Na_2O$ en ajoutant 81 g d'eau de manière à avoir la composition suivante:

— $SiO_2/Al_2O_3 = 1{,}85$

— $Na_2O/SiO_2 = 0{,}95$

— $H_2O/Na_2O = 10$

On observe:

— Au bout de 1 h à 1 h 30 la formation d'un silico-aluminate amorphe,

— Au bout de 2 h la formation de 50% de type A et de 50% de phase amorphe,

— Au bout de 3 h 50% de type A et 50% d'hydroxysodalite. On n'observe donc pas de différence sensible par rapport à l'exemple précédent.

Exemple 3

Cet exemple est identique aux deux précédents sauf que l'on porte le rapport $H_2O/Na_2O$ à 15. Le changement dans l'évolution du système par rapport aux deux exemples précédents est très net puisque on observe:

— Au bout de 1 h la formation d'un silico-aluminate de sodium renfermant plus de 50% de phase 4A,

— Au bout de 1 h 30 pratiquement 100% de 4A,

— Au bout de 2 h la formation de 90% de 4A et de 10% d'hydroxysodalite.

La comparaison entre ces trois exemples montre l'influence du rapport $H_2O/Na_2O$ et met en évidence la difficulté qu'il y a d'obtenir du type 4A en présence de phase amorphe sans hydroxy-sodalite et à ce point de vue il y a lieu de rappeler que l'hydroxysodalite représente la forme thermodynamiquement stable et qu'à une diminution du rapport $H_2O/Na_2O$ correspond une tendance à l'augmentation d'hydroxysodalite.

Exemple 4

Toujours dans les mêmes conditions que dans les exemples précédents on introduit un mélange constitué de 775 g de silicate de sodium et de 350 g d'aluminate de sodium en poudre auxquels on rajoute 350 g d'eau de manière à avoir dans le mélange les rapports suivants:

— $SiO_2/Al_2O_3 = 2$

— $Na_2O/SiO_2 = 0{,}905$

— $H_2O/Na_2O = 15$

Après filtration lavage et séchage l'observation aux rayons X révèle la présence:

— Au bout d'une heure d'un silico-aluminate de sodium constitué exclusivement de zéolite 4 A,

— Au bout de deux heures d'un silico-aluminate de sodium renfermant 90% de phase 4 A et 10% d'hydroxy-sodalite,

— Au bout de trois heures, d'un silico-aluminate de sodium renfermant 80% de phase 4 A et 20% d'hydroxy-sodalite. Ce silico-aluminate présente une répartition granulométrique moyenne de 3—4$\mu$ étroite mesurée au compteur Coulter.

Exemple 5

Cet exemple est identique à l'exemple 4 sauf que l'on mélange 775 g de silicate et 350 g d'aluminate et 61 g d'eau de manière à avoir la composition suivante:

$SiO_2/Al_2O_3 = 2$

$Na_2O/SiO_2 = 0{,}905$

$H_2O/Na_2O = 10$

On observe:

— Au bout d'une heure la formation d'un silico-aluminate de sodium renfermant 10% de phase 4 A et 90% de phase amorphe,

— Au bout de deux heures pratiquement 100% de type 4 A,

— Au bout de trois heures, 40% de type 4 A et 60% d'hydroxysodalite.

La comparaison entre les exemples 4 et 5 montre donc clairement qu'à une augmentation du rapport $H_2O/Na_2O$ correspond une augmentation de phase cristalline et la comparaison avec les exemples 1, 2 et 3 l'influence du rapport $SiO_2/Al_2O_3$.

Exemple 6

Cet exemple est identique aux exemples précédents sauf que l'on mélange 734 g de silicate et 300 g d'aluminate et 130 g d'eau de manière à avoir la composition suivante:

$SiO_2/Al_2O_3 = 2,2$

$Na_2O/SiO_2 = 0,86$

$H_2O/Na_2O = 12$

On observe:

— Au bout de 30 mn la formation d'un silico-aluminate de sodium renfermant 80% de phase 4 A,

— Au bout de 1 h 30 90% de 4 A et 10% hydroxysodalite,

— Au bout de 2 h 80% de 4 A et 20% hydroxysodalite.

Exemple 7

Dans cet exemple on maintient les mêmes rapports

$SiO_2/Al_2O_3 = 2,2$

$Na_2O/SiO_2 = 0,86$

qu'à l'exemple 6 mais on augmente le rapport $H_2O/Na_2O$ en le portant à 15.

On observe:

— Au bout de 30 nm déja 80% de 4 A,

— Au bout de 1 h et 1 h 30 la seule présence d'un aluminosilicate de sodium de type 4 A.

— Au bout de 2 h à côté de la phase 4 A apparaissent des traces d'hydroxysodalite.

La comparaison entre les exemples 6 et 7 montre donc clairement qu'à une augmentation du rapport $H_2O/Na_2O$ correspond une augmentation de la stabilité de la phase 4 A et à une diminution de la phase hydroxysodalite.

Exemple 8

Cet exemple est identique au précédent, sauf que l'on a abaisse le rapport molaire $H_2O/Na_2O$ jusqu'à 10. Dans les mêmes conditions et également au bout de 2 heures le produit obtenu correspond à une phase amorphe.

Exemple 9

Dans cet exemple on a cherché à réduire la rapport $SiO_2/Al_2O_3$ jusqu'à 1,5. Dans les mêmes conditions opératoires que précédemment et pour un rapport $Na_2O/SiO_2$ — 1,11 et un rapport $H_2O/Na_2O$ égal à 15, on observe que la phase 4 A est prédominante.

Les exemples précédents illustrent donc bien l'influence de la variation de la composition du milieu. Ces exemples ont tous été réalisés dans les mêmes conditions de température et les résultats obtenus sont fonction de la température choisie.

Afin de mieux visualiser ces résultats on les a résumés au tableau suivant:

TABLEAU I

| Ex | $SiO_2/Al_2O_3$ | $Na_2O/SiO_2$ | $Na_2O/Al_2O_3$ | $H_2O/SiO_2$ | $H_2O/Na_2O$ | T° | Temps | Phase |
|---|---|---|---|---|---|---|---|---|
| 1 | 1,85 | 0,95 | 1,737 | 8,15 | 8,58 | 80 | 1h30<br>2h00 | Amorphe<br>60 A — 40 HS |
| 2 | 1,85 | 0,95 | 1,737 | 9,5 | 10,00 | 80 | 1h<br>2h<br>3h | Amorphe<br>50 A + 50 amorp.<br>50 A + 50 HS |
| 3 | 1,85 | 0,95 | 1,737 | 14,25 | 15,00 | 80 | 1h<br>1h30<br>2h | 50 A<br>100 A<br>90 A + 10 HS |
| 4 | 2 | 0,95 | 1,810 | 13,57 | 15,00 | 80 | 1h<br>2h<br>3h | A<br>90 A + 10 HS<br>80 A + 20 HS |
| 5 | 2 | 0,95 | 1,810 | 9,05 | 10,00 | 80 | 1h<br>2h<br>3h | 10 A + 90 amorp-<br>100 A<br>40 A + 60 HS |
| 6 | 2,2 | 0,86 | 1,892 | 10,32 | 12,00 | 80 | 30 mn<br>1h<br>2h | 80 A<br>100 A<br>80 A + 20 HS |
| 7 | 2,2 | 0,86 | 1,89 | 12,9 | 15,00 | 80 | 30 mn<br>1h<br>2h | 80 A<br>100 A<br>A + traces HS |
| 8 | 1,5 | 1,11 | 1,66 | 11,1 | 10,00 | 80 | 2h | Amorphe |
| 9 | 1,5 | 1,11 | 1,66 | 16,7 | 15,00 | 80 | 2h | 4 A |

Exemple 10

Cet exemple est identique à l'exemple 4, sauf que l'on interrompt le mélange au bout de 30 mn. On observe alors aux rayons X que le milieu correspond à l'état pâteux, suivant la phase solide, et est amorphe. On effectue un prélèvement d'une partie d'un mélange que l'on laisse évoluer à 80°C sans aucune agitation, alors que le reste du mélange est traité dans le malaxeur comme à l'exemple 1.

Au bout de 30 mn, donc après un traitement thermique total de 1 heure, on observe que pour la partie restée dans le malaxeur, l'on obtient un silico-aluminate de sodium constitué exclusivement de type 4A, comme à l'exemple 4, alors que pour la partie prélevée et non agitée on note la présence à côté de la phase de type 4A, d'environ 20% de phase amorphe.

Exemple 11

Dans cet exemple on part de 266 g de métakaolin activé à 600°C, 144 g de soude caustique en pastilles, de 453 g d'eau, ce qui correspond aux rapports molaires:

$SiO_2/Al_2O_3 = 2$

$H_2O/Na_2O = 15$

$Na_2O/SiO_2 = 0,75$

On chauffe à 80°C dand un malaxeur identique à celui des exemples précédents.

Au bout de trois heures on obtient un mélange de 80% de silico-aluminate de sodium cristallin de type 4A et de 20 d'hydroxy-sodalite.

Dans la série d'exemples suivants on met on oeuvre toujours les mêmes réactifs dans le même mélangeur. Ces exemples ont pour but de montrer comment on passe de l'obtention d'une zéolite 4A à une zéolite Na—P ou B qui se distingue de celle-là par sa formule chimique $Na_2O$, $Al_2O_3$ $3,5 \pm 1,5$ $SiO_2$ et qui cristallise comme elle dans le système cubique, mais avec un paramètre voisin de 10Å.

Exemple 12

Dans cet exemple le mélange est constitué par 216 g d'aluminate, 544 g de silicate et 374 g d'eau de manière à avoir la composition suivante:

$SiO_2/Al_2O_3 = 2,2$

$Na_2O/SiO_2 = 0,85$

$H_2O/Na_2O = 20$

On introduit tout d'abord l'aluminate à sec dans le malaxeur qui est à une température de 50—60°C, puis presque aussitôt la solution de silicate et l'eau. On fait monter la température jusque vers 90—92°C que l'on maintient pendant 5 h 30. On obtient une quantité prédominante de 4A mais l'on note la présence de traces d'hydroxysodalite et surtout de zéolite Na—P.

Exemple 13

Dans cet exemple on conserve la même température, le même temps de séjour et le même mode opératoire, mais on modifie la composition du milieu sorte que:

$SiO_2/Al_2O_3 = 2,5$

$Na_2O/SiO_2 = 0,8$

$H_2O/Na_2O = 15$

On observe au début de séjour dans le malaxeur que le mélange se présente sous forme d'une pâte facile à travailler, que environ au bout de 45 mn, il y a prise en masse et que encore environ 15 mn plus tard le milieu redevient fluide.

On observe sur le produit fini une prédominance de zéolite Na—P et des traces de zéolite 4A.

Exemples 14 à 21

Dans ces exemples, on fait varier la composition du milieu afin de mettre en évidence l'influence des divers rapports. On varie aussi la température et/ou le temps de séjour.

On voit en particulier au tableau II qui résume ces exemples, qu'à l'exemple 22 lorsque l'on abaisse la température et diminue le temps de séjour, l'on n'obient que de la phase amorphe.

A l'exemple 21, contrairement au mode opératoire selon les exemples précédents, on introduit d'abord le silicate, l'eau et un peu de soude en pastille, du métasilicate -soit 112 g de métasilicate, 471 de silicate de rapport 3,4, 4,5 g de soude, 633,6 g d'eau permutée, puis 104 g d'aluminate de sodium ajouté lentement en malaxant. On note que le produit obtenu est très homogène.

TABLEAU II

| Ex | $SiO_2/Al_2O_3$ | $Na_2O/SiO_2$ | $Na_2O/Al_2O_3$ | $H_2O/SiO_2$ | $H_2O/Na_2O$ | T° | Temps | Phase |
|---|---|---|---|---|---|---|---|---|
| 12 | 2,2 | 0,85 | 1,85 | 17 | 20 | 90–92 | 5h30 | 4A prédominant<br>traces de Na–P |
| 13 | 2,5 | 0,8 | 2 | 12 | 15 | 90–92 | 5h30 | Na–P prédominant<br>traces 4A |
| 14 | 2,5 | 0,8 | 2 | 9,6 | 12 | 90–92 | 5h | Na–P moyen |
| 15 | 2,5 | 1 | 2,5 | 12 | 12 | 90–92 | 6h | H S forte<br>Na–P moyen |
| 16 | 2,5 | 0,8 | 2 | 16 | 20 | 90–92 | 6h | Na–P prédominant |
| 17 | 3 | 1 | 3 | 15 | 15 | 93 | 6h | H S moyen<br>Na–P forte |
| 18 | 3 | 0,7 | 2,09 | 10,5 | 15 | 90–92 | 5h | Na–P forte |
| 19 | 3,3 | 0,66 | 2,17 | 9,9 | 15 | 90 | 6h | Na–P prédominant |
| 20 | 5 | 0,6 | 3 | 9 | 15 | 92 | 6h | Na–P prédominant |
| 21 | 5 | 0,7 | 3,5 | 21 | 30 | 92 | 4h | Na–P prédominant |
| 22 | 5 | 0,6 | 3 | 9 | 15 | 83 | 3h | Amorphe |

Exemples 23 à 34

Dans les exemples qui suivent, on modifie les conditions opératoires en faisant appel à un autre réacteur présentant un système d'agitation différent constitué par un auto-clave SFS.

D'autre part, on change de réactif de départ. On sait en effet, que la difficulté va croissante de métakaolin calciné à l'hydroxyde d'aluminium.

Dans les exemples qui suivent on part de Bayerite $Al_2O_3$, $3H_2O$ et on forme l'aluminate in situ.

Dans l'exemple 23 on part de 132,6 g de Bayerite, 947,9 g de silicate de sodium, 107,4 g de soude pure en pastilles, et 1,8 g d'eau permutée.

Le solide obtenu, lavé est séché à l'étuve et caractérisé aux rayons X.

On remarque alors les conditions d'obtention de l'hydroxy-cancrinite corresondent à des plages assez étroites.

Aux exemples 30 et 31, on a introduit un gradient de température.

Comme dit précédemment les zéolites, selon l'invention, s'appliquent à tous les usages connus des zéolites, et en particulier, à la détergence.

Exemple 34

Dans cet exemple on part de nitrate d'aluminium et de métasilicate de sodium.

On met en oeuvre 150 g de nitrate $Al(NO_3)_3$, $9H_2O$, 84.9 g de $Na_2SiO_3$, $5H_2O$, 62 g de soude en pastilles et 47 g d'eau, de manière à obtenir la composition active suivante:

$SiO_2/Al_2O_3 = 2$

$Na_2O/SiO_2 = 1,44$

$H_2O/Na_2O = 15,66$

On coule la solution aqueous de nitrate d'aluminium dans la mélange pateux, solution sodique, métasilicate de sodium proposée préalablement.

On chauffe pendant deux heures à 80°C.

Le produit obtenu, à l'analyse aux rayons X, révèle les caractéristiques de la cancrinite.

TABLEAU III

| Ex | $SiO_2/Al_2O_3$ | $Na_2O/SiO_2$ | $Na_2O/Al_2O_3$ | $H_2O/SiO_2$ | $H_2O/Na_2O$ | T° | Temps | Phase |
|---|---|---|---|---|---|---|---|---|
| 23 | 5 | 0,6 | 2,98 | 9 | 15 | 140 | 1h | Na–P prédominant |
| 24 | 5 | 1 | 5 | 15 | 15 | 140 | 1h | Na–P prédominant |
| 25 | 3 | 1 | 2,98 | 30 | 30 | 140 | 1h | Na–P prédominant traces H C |
| 26 | 3 | 1 | 3 | 15 | 15 | 140 | 1h | Na–P prédominant traces H S |
| 27 | 3 | 0,6 | 1,8 | 18 | 30 | 140 | 1h | Na–P prédominant traces H C |
| 28 | 2 | 0,55 | 1,1 | 13,7 | 25 | 135 | 2h | Na–P prédominant |
| 29 | 2,2 | 0,55 | 1,21 | 13,7 | 25 | 135 | 2h | Na–P prédominant |
| 30 | 1,8 | 0,7 | 1,25 | 13,9 | 20 | | 1h | H C prédominant |
| 31 | 1,8 | 0,7 | 1,25 | 17,4 | 25 | | 1h | H C prédominant |
| 32 | 2 | 0,7 | 1,4 | 14 | 20 | 140 | 2h 30 | H C forte Trace Na–P |
| 33 | 2,2 | 0,65 | 1,43 | 13 | 20 | 140 | 1h | H C abondante Ha–P faible |

**Revendications**

1. Procédé de fabrication d'un silico-aluminate alcalin de type 4A par mélange, à chaud, d'au moins une source renfermant de la silice et de l'alumine avec un hydroxyde alcalin et de l'eau, l'un au moins des réactifs étant alimenté sous forme solide, et la cristallisation au moins partielle se produisant simultanément au mélange, caractérisé en ce qu'on mélange les réactifs en proportions telles que le milieu initial a la composition suivante exprimée en rapports molaires:

$SiO_2/Al_2O_3$ compris entre 1,5 et 2,5

$Na_2O/SiO_2$ compris entre 0,8 et 1,20

$H_2O/Na_2O$ compris entre 7 et 15

et prend l'aspect d'un mélange solide, puis on laisse évoluer ce mélange solide jusqu'à sa redispersion sous forme d'une suspension de silico-aluminate que l'on filtre, lave et sèche.

2. Procédé selon la revendication 1, caractérisé en ce que les conditions opératoires sont règlées de manière à atteindre l'état de mélange solide entre 1 minute et 30 minutes.

3. Procédé selon l'une des revendications 1et 2, caractérisé en ce que l'on introduit un réactif lors de l'opération de mélange et de cristallisation.

4. Procédé de fabrication d'un silico-aluminate de type Na—P par mélange, à chaud, d'au moins une source renfermant de la silice et de l'alumine avec un hydroxyde alcalin et de l'eau, l'un au moins des réactifs étant alimenté sous forme solide, caractérisé en ce qu'on mélange les réactifs en proportions telles que le milieu initial a la composition suivante exprimée en rapports molaires:

$SiO_2/Al_2O_3$ compris entre 2,5 et 5

$Na_2O/SiO_2$ compris entre 0,6 et 1

$H_2O/Na_2O$ compris entre 12 et 30

et prend l'aspect d'un mélange solide, une cristallisation au moins partielle se produisant simultanément au mélange, puis on laisse évoluer ce mélange solide à chaud jusqu'à redispersion sous forme d'une suspension de silico-aluminate que l'on filtre, lave et sèche.

**Claims**

1. A process for the production of an alkali-metal silico-aluminate of type 4A by hot mixing at least one source containing silica and alumina with an alkali-metal hydroxide and water, one at least of the reactants being supplied in solid form, and at least partial crystallisation occurring simultaneously with the mixing step, characterised in that the reactants are mixed in proportions such that the initial medium is of the following composition, expressed in molar ratios:

$SiO_2/Al_2O_3$ from 1.5 to 2.5

$Na_2O/SiO_2$ from 0.8 to 1.20

$H_2O/Na_2O$ from 7 to 15

and takes on the appearance of a solid mixture, and then said solid mixture is left to develop until it re-disperses in the form of a suspension of silico-aluminate, which is filtered, washed and dried.

2. A process according to claim 1 characterised in that the operating conditions are so controlled as to produce the state of a solid mixture in from 1 minutes to 30 minutes.

3. A process according to one of claims 1 and 2 characterised in that a reactant is introduced in the mixing and crystallisation operation.

4. A process for producing a silico-aluminate of type Na—P by hot mixing at least one source containing silica and alumina with an alkali-metal hydroxide and water, one at least of the reactants being supplied in solid form, characterised in that the reactants are mixed in proportions such that the initial medium is of the following composition, expressed in molar ratios:

| | |
|---|---|
| $SiO_2/Al_2O_3$ | from 2.5 to 5 |
| $Na_2O/SiO_2$ | from 0.6 to 1 |
| $H_2O/Na_2O$ | from 12 to 30 |

and takes on the appearance of a solid mixture, at least partial crystallisation occurring simultaneously with the mixing step, and then said solid mixture is left to develop in a hot state until re-dispersion thereof in the form of a suspension of silico-aluminate, which is filtered, washed and dried.

**Patentansprüche**

1. Verfahren zur Herstellung von Alkalisilicoaluminaten des Typs 4Å durch Mischen einer $SiO_2$-liefernden Verbindung und einer $Al_2O_3$-liefernden Verbindung in der Wärme mit Alkalihydroxid und Wasser, wobei mindestens eine dieser Substanzen in fester Form zugegeben wird, unter zumindest teilweisen Kristallisation gleichzeitig mit dem Mischen, dadurch gekennzeichnet, daß man die Komponenten in solchen Mengenanteilen mischt, daß im Ausgangsgemisch das Molverhältnis

| | |
|---|---|
| $SiO_2/Al_2O_3$ | 1,5 bis 2,5 |
| $Na_2O/SiO_2$ | 0,8 bis 1,2 |
| $H_2O/Na_2O$ | 7 bis 15 |

beträgt und das Aussehen eines festen Gemisches annimmt, und man dieses sich entwickeln läßt, bis es sich in Form einer Silicoaluminat-Suspension redispergiert, diese Suspension filtriert, den Filterkuchen wäscht und trocknet.

2. Verfahren nach Anspruch 1, dadurch gekennzeichnet, daß man unter solchen Bedingungen arbeitet, daß man den Zustand des festen Gemisches in 1 bis 30 min erhält.

3. Verfahren nach Anspruch 1 oder 2, dadurch gekennzeichnet, daß man während des Mischens und der Kristallisation ein Reaktionsmittel zusetzt.

4. Verfahren zur Herstellung eines Silicoaluminats des Typs Na—P durch Mischen mindestens einer $SiO_2$-liefernden Substanz und einer $Al_2O_3$-liefernden Substanz mit einem Alkalihydroxid und Wasser in der Wärme, wobei zumindest eine dieser Komponenten in fester Form zugeführt wird, dadurch gekennzeichnet, daß man die Komponenten in solchen Mengen einsetzt, daß im Ausgangsgemisch das Molverhältnis

| | |
|---|---|
| $SiO_2/Al_2O_3$ | 2,5 bis 5 |
| $Na_2O/SiO_2$ | 0,6 bis 1 |
| $H_2O/Na_2O$ | 12 bis 30 |

beträgt und dieses Ausgangsgemisch ein festes Aussehen annimmt und gleichzeitig mit dem Mischen eine zumindest teilweise Kristallisation stattfindet, und man das Gemisch in der Wärme sich entwickeln läßt, bis es sich in Form einer Silicoaluminium-Suspension redispergiert, diese Suspension filtriert, den Filterkuchen wäscht und trocknet.